# EUROPEAN PATENT APPLICATION

(11) **EP 1 582 373 A2**
(43) Date of publication of application: **05.10.2005**
(21) Application number: 05251718.2
(22) Date of filing: 21.03.2005
(51) Int. Cl.: B41M 5/28

(54) **Decolorable image forming material**

(30) Priority: 31.03.2004 JP 2004107342
(71) Applicant: KABUSHIKI KAISHA TOSHIBA, Tokyo 105-8001 (JP)
(72) Inventor: Takayama, Satoshi, IP Division Toshiba Corporation, Minato-ku, Tokyo 105-8001 (JP); Sano, Kenji, IP Division Toshiba Corporation, Minato-ku, Tokyo 105-8001 (JP)
(74) Representative: Granleese, Rhian Jane

(57) **Abstract**

The present invention relates to a decolorable image forming material having a color former, a developer, a binder resin and a surfactant.
The present invention also relates to a decolorable image forming material having a powder including a color former, a developer and a binder resin, and a surfactant externally added to the powder.

## Description

The present invention relates to a decolorable image forming material that can be decolorized by heating or by contact with a solvent.

Forest conservation is an essential requirement to maintain the terrestrial environment and suppress the greenhouse effect caused by CO₂. In order to promote wood resource saving and forest regeneration including tree planting, it is an important subject to efficiently use the paper resources that we presently possess. Currently, paper resources are "recycled" by recovering paper fibers from used paper through a deinking step of removing image forming materials printed on the used paper, remaking paper fibers to manufacture recycled paper with low paper quality, and using the recycled paper according to the purpose. Thus, problems of a high cost of the deinking step and possibility of new environmental pollution by waste fluid treatment are pointed out.

On the other hand, reuse of a hard copy has been put into practice through erasure of images, for example, by using an eraser for pencil images and a correcting fluid for ink images. However, it is apparent that these methods have problems in respect of deterioration of the paper quality and inefficiency of the reuse. Recently, a rewritable paper has been proposed in order to reuse a hard copy paper. However, since the rewritable paper is made of a special paper, the rewritable paper, which can certainly be used again, cannot be recycled. The rewritable paper sheet is also defective in that recording techniques other than thermal recording cannot be applied to. Here, "reuse" in which a paper sheet is repeatedly used for the same purpose with preventing deterioration of paper quality as much as possible is different from "recycling" in which a paper sheet with deteriorated quality is used for other purposes. Now, the "reuse" can be said to be more important concept from a viewpoint of conservation of paper resources. If effective "reuse" at each "recycling" stage is performed, additional waste of paper resources can be suppressed minimum.

The present inventors have paid their attention to a phenomenon caused by a system of a color former and a developer that a colored state is realized when interaction between the color former and the developer is increased and a decolorized state is realized when the interaction is decreased. Thus, the inventors have proposed, as paper reuse techniques, image forming materials of a composition system comprising a color former, a developer and a decolorizing agent having a property to capture the developer. The image forming materials can exhibit stably a colored state around room temperature and can retain a decolorized state for a long time at practical temperatures by treatment with heat or a solvent. The inventors have also proposed image decolorizing processes and image decolorizing apparatuses for the image forming materials. These image forming materials have advantages of high stability of colored and decolorized states of the images, highly safety in view of materials, applicability to electrophotography toners, liquid inks, ink ribbons and writing instruments, and feasibility of large-scale decolorizing treatment, which cannot be realized in any prior art.

The decolorable image forming materials, which we have proposed, have a great resource-saving effect, because they can promote reuse and recycling of paper and therefore can remarkably reduce waste paper. During further study of decolorable image forming materials, we have found that, if an image recording medium is made of a polar polymer such as a paper and if a binder contained in the image forming material is made of a non-polar material having a property of easily capturing the color former by heating or contact with a solvent, even an image forming material without an decolorizing agent having a property of capturing a developer can be decolorized a few times by utilizing the ability of the image recording medium, i.e., the paper, to capture the developer. Thus, we have also proposed an image forming material without the decolorizing agent having the property of capturing the developer, and a method of decolorizing the same (see, for example, Jpn. Pat. Appln. KOKAI Publication No. 2000-284520).

In the image forming material that does not contain a decolorizing agent, the image recording medium (paper) has a function of trapping the developer, with the result that the decolorizing performance of the image forming material is dependent on the diffusion of the developer. However, if it is intended to thermally promote the diffusion of the developer, it is difficult to improve the decolorizing performance because of limitation in the thermal properties of the image recording medium (e.g., paper) or a component of the image forming material (e.g., a binder resin in the case of a toner).

A decolorable image forming material according to an aspect of the present invention comprises a color former, a developer, a binder resin, and a surfactant.

A decolorable image forming material according to another aspect of the present invention comprises a powder including a color former, a developer and a binder resin, and a surfactant externally added to the powder.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a graph showing the thermal decolorizing performance with respect to decolorable toners of Example 1 and Comparative example 1;
FIG. 2 is a graph showing the thermal decolorizing performance with respect to decolorable toners of Example 2 and Comparative example 2;
FIG. 3 is a graph showing the relationship between the amount of zinc stearate and the thermal decolorizing performance with respect to decolorable toners of Example 3;
FIG. 4 is a graph showing the relationship between the amount of zinc stearate and the reflection density of powder with respect to decolorable toners of Example 3;
FIG. 5 is a graph showing the relationship between the amount of aluminum stearate and the thermal decolorizing performance with respect to decolorable toners of Comparative example 3; and
FIG. 6 is a graph showing the relationship between the amount of aluminum stearate and the reflection density of powder with respect to decolorable toners of Comparative example 3.

A decolorable image forming material according to an embodiment of the present invention comprising a color former, a developer, a binder resin and a surfactant means one in which the surfactant is internally added together with the color former, the developer and the binder resin. On the other hand, a decolorable image forming material according to another embodiment of the present invention comprising a powder including a color former, a developer and a binder resin, and a surfactant externally added to the powder.

The present inventors have found that, in a decolorable image forming material prepared by adding internally or externally a small amount of surfactant to other components of the color former, the developer and the binder resin, thermal diffusion of the developer is promoted so as to improve thermal decolorizing performance.

In the embodiments of the present invention, a metal salt of fatty acid can be suitably used as the surfactant. The metal salt of fatty acid includes an alkali metal salt of fatty acid such as sodium stearate, sodium laurate, sodium oleate, potassium stearate, potassium laurate, and potassium oleate; an alkaline earth metal salt of fatty acid such as calcium stearate, calcium laurate, calcium oleate, barium stearate, barium laurate, and barium oleate; and other metal salt of fatty acid such as zinc stearate, zinc laurate, zinc oleate, aluminum stearate, aluminum laurate, and aluminum oleate. In particular, calcium stearate, aluminum stearate and zinc stearate are preferred.

In a case where a surfactant is internally added with a color former, a developer and a binder resin in an embodiment according to the present invention, the amount of the surfactant is preferably set to a range of 0.01 wt% or more to 0.03 wt% or less based on the total weight of the image forming material. If the amount of the surfactant is less than 0.01 wt% or more than 0.03 wt%, it is impossible to improve thermal decolorizing performance of the image forming material.

In a case where a surfactant is externally added to a powder including a color former, a developer and a binder resin in another embodiment according to the present invention, the amount of the surfactant is preferably set to a range of 0.1 parts by weight or more to 1 part by weight or less, more preferably a range of 0.3 parts by weight or more to 0.5 parts by weight or less, based on 100 parts by weight of the powder. When the surfactant is externally added, an effective amount of the surfactant affecting to thermal decolorizing performance of the image forming material may be approximately one twelfth to one tenth of the actually added amount. In this embodiment, if the amount of the surfactant is less than 0.1 parts by weight or more than 1 part by weight, it is impossible to improve thermal decolorizing performance of the image forming material.

In the embodiments of the present invention, following materials can be used for the color former, the developer and the binder resin.

Examples of the color former include electron-donating organic substances such as leucoauramines, diarylphthalides, polyarylcarbinols, acylauramines, arylauramines, rhodamine B lactams, indolines, spiropyrans, and fluorans. Specific examples of the color former are Crystal Violet Lactone (CVL), Malachite Green Lactone, 2-anilino-6-(N-cyclohexyl-N-methylamino)-3-methylfluoran, 2-anilino-3-methyl-6-(N-methyl-N-propylamino)fluoran, 3-[4-(4-pehnylaminophenyl)aminophenyl]amino-6-methyl-7-chlorofluoran, 2-anilino-6-(N-methyl-N-isobutylamino)-3-methylfluoran, 2-anilino-6-(dibutylamino)-3-methylfluoran, 3-chloro-6-(cyclohexylamino)fluoran, 2-chloro-6-(diethylamino)fluoran, 7-(N,N-dibenzylamino)-3-(N,N-diethylamino)fluoran, 3,6-bis(diethylamino)fluoran-γ-(4'-nitro)anilinolactom, 3-diethylaminobenzo[a]-fluoran, 3-diethylamino-6-methyl-7-aminofluoran, 3-diethylamino-7-xylidinofluoran, 3-(4-diethylamino-2-ethoxyphenyl)-3-(1-ethyl-2-methylindol-3-yl)-4-azaphthalide, 3-(4-diethylaminophenyl)-3-(1-ethyl-2-methylindol-3-yl)phthalide, 3-diethylamino-7-chloroanilinofluoran, 3-diethylamino-7,8-benzofluoran, 3,3-bis(1-n-butyl-2-methylindol-3-yl)phthalide, 3-6-dimethylethoxyfluoran, 3-diethylamino-6-methoxy-7-aminofluoran, DEPM, ATP, ETAC, 2-(2-chloroanilino)-6-dibutylaminofluoran, Crystal Violet Carbinol, Malachite Green Carbinol, N-(2,3-dichlorophenyl)leucoauramine, N-benzylauramine, rhodamine B lactam, N-acetylauramine, N-phenylauramine, 2-(phenyliminoethanedilidene)-3,3-dimethylindoline, N,3,3-trimethylindolino-benzospiropyran, 8'-methoxy-N,3,3-trimethylindolino-benzospiropyran, 3-diethylamino-6-methyl-7-chlorofluoran, 3-diethylamino-7-methoxyfluoran, 3-diethylamino-6-benzyloxyfluoran, 1,2-dibenzo-6-diethylaminofluoran, 3,6-di-p-toluidino-4,5-dimethylfluoran, phenylhydrazide-γ-lactam, and 3-amino-5-methylfluoran. These color formers can be used singly or in a combination of two or more species. If color formers are selected properly, a variety of colored states can be obtained.

Examples of the developer include phenols, metal phenolates, carboxylic acids, metal carboxylates, benzophenones, sulfonic acids, metal sulfonates, phosphoric acids, metal phosphates, acidic phosphoric esters, acidic phosphoric ester metal salts, phosphorous acids, and metal phosphites. Examples of a particularly suitable developer include gallic acid; gallate such as methyl gallate, ethyl gallate, n-propyl gallate, i-propyl gallate, and butyl gallate; dihydroxybenzoic acid and its ester such as 2,3-dihydroxybenzoic acid, and methyl 3,5-dihydroxy-benzoate; hydroxyacetophenones such as 2,4-dihydroxy-acetophenone, 2,5-dihydroxyacetophenone, 2,6-dihydroxyacetophenone, 3,5-dihydroxyacetophenone, and 2,3,4-trihydroxyacetophenone; hydroxybenzophenones such as 2,4-dihydroxybenzophenone, 4,4'-dihydroxybenzophenone, 2,3,4-trihydroxybenzophenone, 2,4,4'-trihydroxybenzophenone, 2,2',4,4'-tetrahydroxybenzophenone, and 2,3,4,4'-tetrahydroxybenzophenone; biphenols such as 2,4'-biphenol, and 4,4'-biphenol; and polyhydric phenols such as 4-[(4-hydroxyphenyl)methyl]-1,2,3-benzenetriol, 4-[(3,5-dimethyl-4-hydroxyphenyl)-methyl]-1,2,3-benzenetriol, 4,6-bis[(3,5-dimethyl-4-hydroxyphenyl)methyl]-1,2,3-benzenetriol, 4,4'-[1,4-phenylenebis(1-methylethylidene)bis(benzene-1,2,3-triol)], 4,4'-[1,4-phenylenebis(1-methylethylidene)-bis(1,2-benzenediol)], 4,4',4"-ethylidenetrisphenol, 4,4'-(1-methylethylidene)bisphenol, and methylene tris-p-cresol. These developers can be used singly or in a combination of two or more species.

In an image forming material containing a color former, a developer and a binder resin, the color density of the image forming material prepared by kneading is increased and also compatibility of the binder resin with the color former is enhanced with decrease in the amount of the polar groups contained in the binder resin. Therefore, it is advantageous to use a nonpolar resin as the binder resin in order to increase a contrast ratio between a colored state and a decolorized state.

In the image forming material according to the embodiments of the present invention, a styrene-based copolymer may be used as a particularly preferable binder resin. Examples of a styrene-based monomer that can be used as a raw material of the binder resin include styrene, o-methylstyrene, m-methylstyrene, p-methylstyrene, p-ethylstyrene, 2,4-dimethylstyrene, p-n-butylstyrene, p-tert-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene, and 3,4-dichlorostyrene. These monomers can be used singly or in a combination of two or more species. Examples of a suitable monomer copolymerized with the styrene-based monomer include a rubber component such as butadiene, propylene, and chloroprene. The amount of the rubber component in the styrene-based copolymer is preferably set to a range of 2 to 15 wt%, more preferably a range of 7 to 13 wt%.

Other vinyl monomers which may be copolymerized with the styrene-based monomer include methyl methacrylate, ethyl methacrylate, isobutyl methacrylate, cyclohexyl methacrylate, ethylhexyl methacrylate, lauryl methacrylate, stearyl methacrylate, vinyl acetate, vinyl propionate, methacrylonitrile, dimethyl maleate, diethyl maleate, dimethyl fumarate, dibutyl fumarate, dimethyl itaconate, dibutyl itaconate, methyl vinyl ether, ethyl vinyl ether, n-butyl vinyl ether, and isobutyl ether. These vinyl monomers can be used singly or in a combination of two or more species. The amount of the vinyl monomer in the styrene-based copolymer is preferably set to 10 wt% or less.

Examples of a suitable styrene-based copolymer used as the binder resin include styrene-n-butyl methacrylate, styrene-isobutyl methacrylate, styrene-ethyl acrylate, styrene-n-butyl acrylate, styrene-methyl methacrylate, styrene-glycidyl methacrylate, styrene-dimethylaminoethyl methacrylate, styrene-diethylaminopropyl methacrylate, styrene-2-ethylhexyl acrylate, styrene-butyl acrylate-N-(ethoxy methyl)acrylamide, styrene-ethylene glycol methacrylate, styrene-4-hexafluorobutyl methacrylate, styrene-butadiene copolymer, acrylonitrile-acryl rubber-styrene terpolymer, acrylonitrile-styrene-acrylate terpolymer, styrene-acrylonitrile copolymer, acrylonitrile-chlorinated styrene-styrene terpolymer, acrylonitrile-ethylene vinyl acetate-styrene terpolymer, styrene-p-chlorostyrene copolymer, styrene-propylene copolymer, styrene-butadiene rubber, styrene-maleate copolymer, and styrene-maleic anhydride copolymer. It is possible to blend the polymer of the above acrylate monomer with polystyrene. In this case, the polyacrylate component may be either a homopolymer or a copolymer.

Thermal characteristics of a binder resin for toner are represented by a softening temperature and a glass transition temperature. The binder resin suitable for toner preferably has a softening temperature of 60 to 190°C and a glass transition temperature of 20 to 110°C. The softening temperature is measured with a flow tester, for example, CFT-500 manufactured by Shimadzu Corp. The softening temperature is defined as a temperature (T_{1/2}) at the time when the flow-out amount of a sample reaches the half value of the sample amount under the following conditions: the nozzle size is 1.0 mmφ × 10.0 mm, the load is 30 kgf, the temperature rise is 3°C/min, and sample amount is 1.0g. The glass transition temperature is defined as a temperature corresponding to a shoulder value after melt quench in differential scanning calorimetry (DSC).

Methods for mixing and dispersing the color former and the developer with the binder resin include a wet dispersion method in which a solvent is used in an apparatus such as a high-speed dissolver, a roll mill or a ball mill, and a melting and kneading method with a roll, a pressure kneader, an internal mixer or a screw extruder. Also, a ball mill, a V-type mixer, a Forberg mixer, or a Henschel mixer can be used as a mixer.

A charge control agent used for a decolorable toner is required to be colorless so that a color is not left upon erasing. Suitable charge control agents include negative charge control agents such as E-84 (zinc salicylate compound) manufactured by Orient Kagaku K.K., N-1, N-2 and N-3 (all are phenol-based compounds) manufactured by NIPPON KAYAKU CO. LTD., FCA-1001N (styrene-sulfonic acid-based resin) manufactured by FUJIKURA KASEI CO. LTD., and positive charge control agents such as TP-302 (CAS #116810-46-9) and TP-415 (CAS #117342-25-2) manufactured by Hodogaya Chemical Co. Ltd., P-51 (quaternary amine compound) and AFP-B (polyamine oligomer) manufactured by Orient Kagaku K.K., and FCA-201PB (styrene-acrylic quaternary ammonium salt-based resin) manufactured by FUJIKURA KASEI CO. LTD.

In the decolorable toner according to the embodiments of the present invention, if necessary, a wax for controlling fixing property may be blended. It is preferable that the wax is formed of higher alcohol, higher ketone or higher aliphatic ester, and not to cause the color former to develop the color. It is desirable that the wax has an acid value not larger than 10. It is also preferable that the wax has a weight average molecular weight of 10² to 10⁵, and more preferably 10² to 10⁴. Low-molecular weight polypropylene, low-molecular weight polyethylene, low-molecular weight polybutylene, low-molecular weight polyalkane and the like can also be used if the weight average molecular weight is in the above range. It is preferable that the amount of wax to be added is 0.1 to 30 parts by weight, more preferably 0.5 to 15 parts by weight based on the total weight of the decolorable toner. Incidentally, in a toner fixed by a heat roll, the wax is added to improve release characteristics from the heat roll. In this case, the amount of wax is set to 5 parts by weight or less. In the toner fixed by pressure contains the wax as a main component, and the wax constitutes the core of the microcapsule structure.

In the decolorable toner according to the embodiments of the present invention, it is possible to blend, if necessary, an external additive to control fluidity, storage capability, blocking resistance or polishing capability for photosensitive body. The examples of the external additive include silica fine particles, metal oxide fine particles, and a cleaning assistant. The silica fine particles include the fine particles of, for example, silicon dioxide, sodium silicate, zinc silicate, and magnesium silicate. The metal oxide fine particles include fine particles of, for example, zinc oxide, magnesium oxide, zirconium oxide, strontium titanate, and barium titanate. The cleaning assistant includes resin powders of polymethyl methacrylate, polyvinylidene fluoride, and polytetrafluoroethylene. These external additives may be subjected to surface treatment such as hydrophobing treatment. The hydrophobing treatment is applied to substantially all the external additives used for the toner. For the hydrophobing treatment of the negative charge toner, a silane coupling agent, a titanium coupling agent, or silicone oil may be used. For the hydrophobing treatment of the positive charge toner, aminosilane or silicone oil having an amine group on the side chain may be used. The amount of the external additive to be added is preferably set to 0.05 to 5 parts by weight, more preferably 0.1 to 3.0 parts by weight based 100 parts by weight of the toner. The number average particle size of the primary particles of an external additive will be described. In the case of silica, particles with a size of 10 to 20 nm are widely used, and particles with a size of approximately 100 nm may be used as well. In the case of an external additive other than silica, particles with an average particle size of 0.05 to 3 µm, which is much larger than the particle size of the silica particles, may be often used.

### EXAMPLES

### [Example 1]

Following materials were weighed: 4.15 wt% of Blue 203 (a leuco dye manufactured by Yamada Kagaku Co., Ltd.) as a color former, 2 wt% of ethyl gallate as a developer, 5 wt% of polypropylene wax as a wax component, 87.83 wt% of styrene-butadiene copolymer as a binder resin, 1 wt% of LR-147 (manufactured by Japan Carlit Co., Ltd.) as a charge control agent, and 0.02 wt% of zinc stearate as a surfactant. These materials were sufficiently mixed with a Henschel mixer. The mixture was kneaded and dispersed with a three-roll mill. The kneaded mass was pulverized with a pulverizer into a fine powder with an average particle size of 11 µm. Then, 1 part by weight of hydrophobic silica was externally added to 100 parts by weight of the powder so as to prepare a blue toner for electrophotography (Example 1).

For comparison, a blue toner for electro-photography (Comparative example 1) was prepared in similar processes as above, except that zinc stearate as a surfactant was not added.

Each toner was loaded in a multi function printer (MFP), Premage 351 manufactured by Toshiba TEC Corporation. Then, images of solid patterns having several levels of reflection density were printed on a copying paper sheet, P505 available from Toshiba TEC Corporation. The patterns were used for evaluating decolorizing performance. Each paper sheet was subjected to thermal erasing at 130°C for two hours in a thermostat. Each paper sheet was tested for reflection density of the residual images.

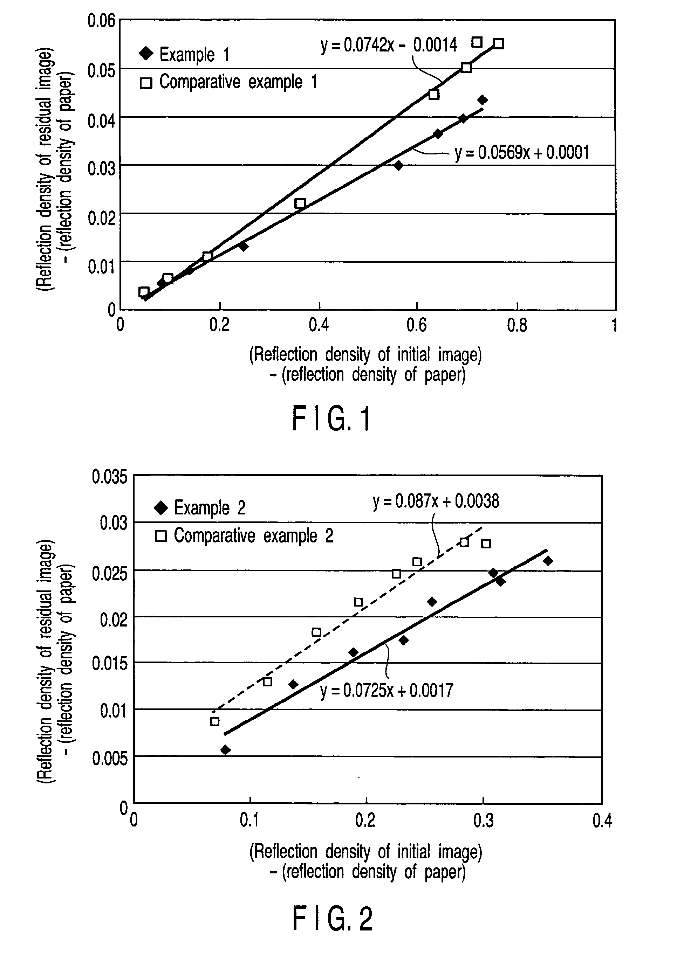

FIG. 1 is a graph showing the results of the erasing tests. In FIG. 1, the transverse axis denotes the difference between the reflection density of the initial image and the reflection density of the paper before the thermal erasing, and the vertical axis denotes the difference between the reflection density of the residual image and the reflection density of the paper after the thermal erasing. In the graph of FIG. 1, the inclination of the regression line by the least squares method represents thermal decolorizing characteristics of the toner. It should be noted that the smaller the inclination of the regression line implies the higher decolorizing performance.

As shown in FIG. 1, the inclination of the regression line is about 0.057 for the toner of Example 1, whereas that is about 0.074 for the toner of the Comparative example 1. The experimental data show that the toner of Example 1 makes it possible to decrease the reflection density of the residual image by about 23%, compared with the toner of Comparative example 1. It is confirmed that the thermal decolorizing performance of the decolorable toner of Example 1 is markedly improved by the internal addition of only 0.02 wt% of surfactant.

### [Example 2]

Following materials were weighed: 4.15 wt% of Blue 203 (a leuco dye manufactured by Yamada Kagaku Co., Ltd.) as a color former, 2 wt% of ethyl gallate as a developer, 5 wt% of polypropylene wax as a wax component, 87.85 wt% of styrene-butadiene copolymer as a binder resin, 1 wt% of LR-147 (manufactured by Japan Carlit Co., Ltd.) as a charge control agent. These materials were sufficiently kneaded and dispersed with a kneader. The kneaded mass was pulverized with a pulverizer into a fine powder with an average particle size of 9.5 µm. Then, 1.4 parts by weight of hydrophobic silica and 0.3 parts by weight of zinc stearate were externally added to 100 parts by weight of the powder so as to prepare a blue toner for electrophotography (Example 2).

For comparison, a blue toner for electro-photography (Comparative example 2) was prepared in similar processes as above, except that 1.4 parts by weight of hydrophobic silica alone was externally added to 100 parts by weight of the powder without adding zinc stearate as a surfactant.

Each toner was loaded in a printer, NX810 manufactured by Richo Company Ltd. Then, images of solid patterns having several levels of reflection density were printed on a copying paper sheet, Green 100 available from Fuji Zerox Co., Ltd. The patterns were used for evaluating decolorizing performance. Each paper sheet was subjected to thermal erasing at 140°C for two hours using a customized decolorizing apparatus. Each paper sheet was tested for reflection density of the residual images.

FIG. 2 is a graph showing the results of the erasing tests. As shown in FIG. 2, the inclination angle of the regression line is about 0.0725 for the toner of Example 2, whereas that is about 0.087 for the toner of Comparative example 2. The experimental data show that the toner of Example 2 makes it possible to decrease the reflection density of the residual image by about 17%, compared with the toner of Comparative example 2. It is confirmed that the thermal decolorizing performance of the decolorable toner of Example 2 is markedly improved by the external addition of only 0.3 parts by weight of surfactant.

### [Example 3]

Following materials were weighed: 4.15 wt% of Blue 203 (a leuco dye manufactured by Yamada Kagaku Co., Ltd.) as a color former, 2 wt% of ethyl gallate as a developer, 5 wt% of polypropylene wax as a wax component, 1 wt% of LR-147 (manufactured by Japan Carlit Co., Ltd.) as a charge control agent, 0 to 0.2 wt% of zinc stearate as a surfactant, and the balance of styrene-butadiene copolymer as a binder resin to make the image forming material 100 wt%. Each composition was sufficiently mixed with a Henschel mixer. The mixture was kneaded and dispersed with a three-roll mill. The kneaded mass was pulverized with a pulverizer into a fine powder with an average particle size of 11.3 µm. Then, 1 part by weight of hydrophobic silica was externally added to 100 parts by weight of the powder so as to prepare a blue toner for electrophotography.

Each toner was loaded in a multi function printer (MFP), Premage 351 manufactured by Toshiba TEC Corporation. Then, images of solid patterns having several levels of reflection density were printed on a copying paper sheet. The patterns were used for evaluating decolorizing performance. Each paper sheet was subjected to thermal erasing at 130°C for two hours in a thermostat.

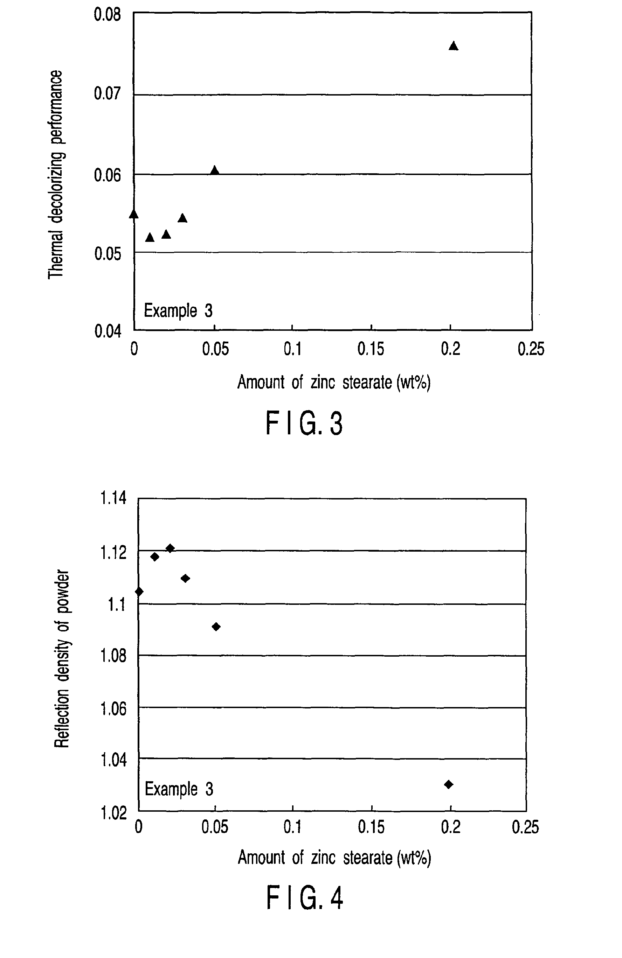

FIG. 3 is a graph showing the results of the erasing tests. In FIG. 3, the transverse axis denotes the amount of the zinc stearate, and the vertical axis denotes the thermal decolorizing performance, i.e., the value of the inclination of the regression line determined by calculation as in Example 1. As described in connection with Example 1, the smaller the value in the vertical axis implies the higher decolorizing performance.

As shown in FIG. 3, effect of improving the thermal decolorizing performance is observed when the amount of zinc stearate is in the range of 0.01 to 0.03 wt%. However, effect of improving the thermal decolorizing performance is not observed when the amount of zinc stearate exceeds 0.03 wt%.

FIG. 4 shows the reflection density of powder. In FIG. 3, the transverse axis denotes the amount of the zinc stearate, and the vertical axis denotes the reflection density of powder. The reflection density of powder was measured by using a colorimeter (CR 300 manufactured by Konica Minolta) in which the powder was placed in a special cell.

As shown in FIG. 4, the reflection density of powder is slightly improved when the amount of zinc stearate is in the range of 0.01 to 0.03 wt%. However, the reflection density of powder is markedly lowered when the amount of zinc stearate exceeds 0.03 wt%.

It can be judged from the results of this Example that the image forming material including zinc stearate as the surfactant in the range of 0.01 to 0.03 wt% can provide improved decolorizing performance and coloring performance simultaneously.

### [Example 4]

A blue toner for electrophotography was prepared in a similar manner as in Example 3 using aluminum stearate or calcium stearate as a surfactant instead of zinc stearate where the amount of the surfactant was set to 0.02 wt%. Table 1 shows the results of the reflection density of powder and the decolorizing performance measured in a similar manner as in Example 3. Further, an improvement rate I of contrast between a colored state and a decolorized state was calculated based on these results. The improvement rate I is defined by the following equation: 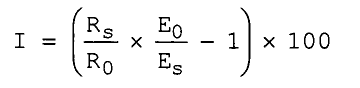 where, Rₛ is a reflection density of powder including a surfactant, R₀ is a reflection density of powder including no surfactant, Eₛ is thermal decolorizing performance of a toner including a surfactant, and E₀ is thermal decolorizing performance of a toner including no surfactant. The unit of the improvement rate I is percent.

**Table 1**

| Surfactant | Reflection density of powder | Decolorizing performance | Improvement rate of contrast |
|---|---|---|---|
| none | 1.105 | 0.055 | 0 % |
| zinc stearate | 1.12 | 0.052 | 7.2 % |
| aluminum stearate | 1.11 | 0.051 | 8.3 % |
| calcium stearate | 1.09 | 0.052 | 4.3 % |

It is confirmed that the contrast between a colored state and a decolorized state can be improved when aluminum stearate or calcium stearate is used as the surfactant as well as when zinc stearate is used. Among the above three surfactants, aluminum stearate is most effective, but calcium stearate provides slightly lower effectiveness.

### [Comparative example 3]

Following materials were weighed: 4.15 wt% of Blue 203 (a leuco dye manufactured by Yamada Kagaku Co., Ltd.) as a color former, 2 wt% of ethyl gallate as a developer, 5 wt% of polypropylene wax as a wax component, 1 wt% of LR-147 (manufactured by Japan Carlit Co., Ltd.) as a charge control agent, 0 to 0.2 wt% of aluminum stearate as a surfactant, and the balance of polystyrene (XPA6638 available from Mitsui Chemicals, Inc.) as a binder resin to make the image forming material 100 wt%. Using each composition, a blue toner for electrophotography was prepared in a similar manner as in Example 3. Each toner was evaluated in a similar manner as in Example 3.

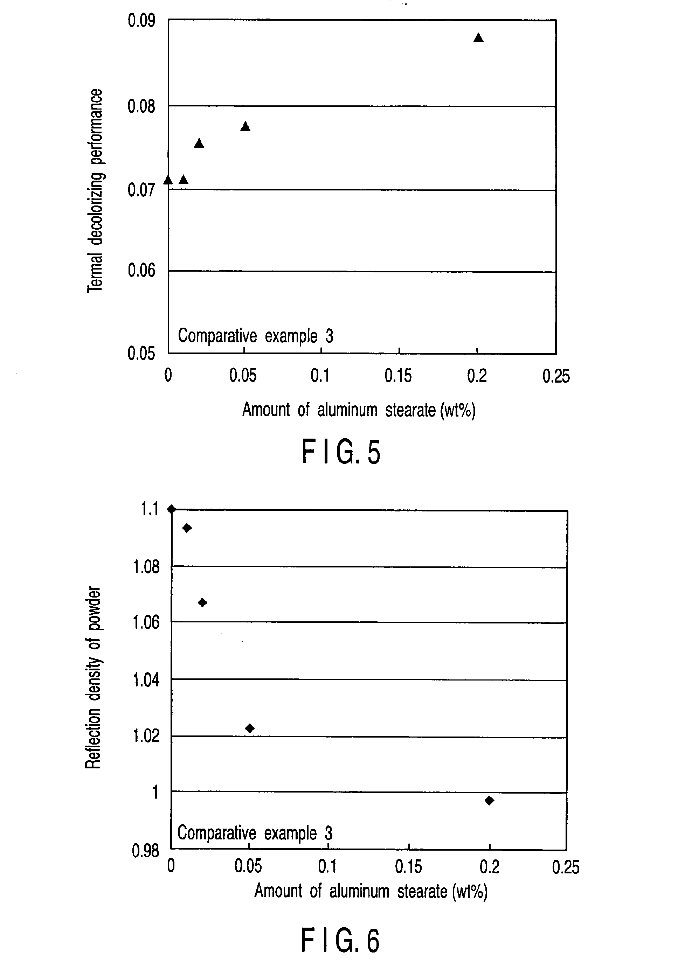

FIG. 5 is a graph showing the results of the erasing tests. In FIG. 5, the transverse axis denotes the amount of the aluminum stearate, and the vertical axis denotes the value of the thermal decolorizing performance. As shown in FIG. 5, effect of improving the thermal decolorizing performance is not observed in each toner of Comparative example 3.

FIG. 6 shows the reflection density of powder. In FIG. 3, the transverse axis denotes the amount of the aluminum stearate, and the vertical axis denotes the reflection density of powder. As shown in FIG. 6, improvement of the reflection density of powder is not observed in each toner of Comparative example 3.

It can be judged from the results of the Comparative example 3 that the image forming material including in which polystyrene is used as the binder resin cannot provide improved decolorizing performance and coloring performance even if the surfactant is added.

## Claims

1. A decolorable image forming material, comprising a color former, a developer and a binder resin, **characterized by** further comprising a surfactant.

2. A decolorable image forming material, comprising a powder including a color former, a developer, and a binder resin, **characterized by** further comprising a surfactant externally added to the powder.

3. The decolorable image forming material according to claim 1, **characterized in that** an amount of the surfactant is 0.01 wt% or more and 0.03 wt% or less.

4. The decolorable image forming material according to claim 2, **characterized in that** an amount of the surfactant is 0.1 parts by weight or more and 1 part by weight based on 100 parts by weight of the powder.

5. The decolorable image forming material according to any one of claims 1 to 4, **characterized in that** the surfactant is a metal salt of fatty acid.

6. The decolorable image forming material according to claim 5, **characterized in that** the metal salt of fatty acid is selected from the group consisting of sodium stearate, potassium stearate, calcium stearate, zinc stearate and aluminum stearate.

7. The decolorable image forming material according to any one of claims 1 to 6, **characterized in that** the color former is selected from leuco dyes.

8. The decolorable image forming material according to any one of claims 1 to 7, **characterized in that** the developer is selected from gallate-based developers.

9. The decolorable image forming material according to any one of claims 1 to 8, **characterized in that** the binder resin is selected from polystyrene-based copolymers.

10. The decolorable image forming material according to any one of claims 1 to 8, **characterized in that** the binder resin is a styrene-butadiene copolymer.

11. The decolorable image forming material according to claim 10, wherein an amount of the butadien in the styrene-butadiene copolymer is 2 wt% or more and 15 wt% or less.

12. The decolorable image forming material according to any one of claims 1 to 11, **characterized in that** the material is printed on a paper medium in a form of a toner.
